(19) Europäisches Patentamt

European Patent Office

Office européen des brevets

(11) Numéro de publication: **0 288 115 B1**

(12) **FASCICULE DE BREVET EUROPEEN**

(45) Date de publication de fascicule du brevet: **03.02.93**

(51) Int. Cl.⁵: **G01S 15/89**, G01S 7/52, G01S 7/62, G01S 7/66

(21) Numéro de dépôt: **88200709.9**

(22) Date de dépôt: **13.04.88**

(54) **Procédé et appareil d'examen de milieux par échographie ultrasonore.**

(30) Priorité: **21.04.87 FR 8705605**

(43) Date de publication de la demande:
**26.10.88 Bulletin 88/43**

(45) Mention de la délivrance du brevet:
**03.02.93 Bulletin 93/05**

(84) Etats contractants désignés:
**DE FR GB SE**

(56) Documents cités:
**EP-A- 0 001 933**
**EP-A- 0 039 434**
**EP-A- 0 143 664**
**EP-A- 0 181 677**
**US-A- 3 693 100**

**ULTRASONICS SYMPOSIUM PROCEEDINGS (IEEE), Chicago, 14-16 octobre 1981, vol. 2, pages 599-600, IEEE, New York, US; T. SATO et al.: "A method of noninvasive determination of an inhomogeneous layer's structure and adaptive image reconstruction"**

(73) Titulaire: **LABORATOIRES D'ELECTRONIOUE PHILIPS**
**3, Avenue Descartes**
**F-94450 Limeil-Brévannes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB SE**

(72) Inventeur: **Pergrale, Jean**
**Sociéte Civile S.P.I.D. 209 rue de L'Université**
**F-75007 Paris(FR)**

(74) Mandataire: **Landousy, Christian et al**
**Société Civile S.P.I.D. 156, Boulevard Haussmann**
**F-75008 Paris(FR)**

**MEDICAL & BIOLOGICAL ENGINEERING & COMPUTING, vol. 19, no. 4, juillet 1981, pages 437-442, IFMBE, Stevenage, GB; J.M. THIJS-SEN et al.: "Computer-assisted echography: statistical analysis of A-mode video echograms obtained by tissue sampling"**

**IEEE TRANSACTIONS ON SONICS AND UL-TRASONICS, vol. SU-32, no. 4, juillet 1985, pages 537-543, IEEE, New York, US; P.M. SHANKAR et al.: "Speckle reduction with improved resolution in ultrasound images"**

**Description**

La présente invention concerne un procédé d'examen de milieux par échographie ultrasonore, comprenant d'une part l'émission d'ondes ultrasonores vers le milieu à explorer à l'aide d'une structure transductrice excitée à cet effet avec des fréquence, durée et rythme d'émission déterminés, et d'autre part la réception et le traitement des signaux échographiques correspondant aux échos renvoyés vers ladite structure transductrice par les obstacles rencontrés dans le milieu exploré, ledit traitement des signaux échographiques associés à chaque ligne échographique du plan de coupe dans le milieu exploré comprenant une amplification desdits signaux, leur correction des effets de l'atténuation en fonction du temps ou de la profondeur d'exploration, et leur visualisation pour constituer une image de référence. L'invention concerne également un appareil pour la mise en oeuvre de ce procédé.

Malgré les avantages de l'échographie ultrasonore, tels que l'absence de radiations, la robustesse des équipements actuels, etc..., la complexité des interactions entre les ondes ultrasonores et les milieux explorés -qui sont des tissus biologiques, dans le cas de l'échographie à application médicale- et le nombre élevé des paramètres physiques entrant en jeu empêchent certainement de tirer pleinement profit des possibilités de cette méthode pour l'analyse et la connaissance desdits milieux.

Le but de l'invention est de proposer un procédé et un appareil d'échographie ultrasonore ayant pour objectif de contourner cette limitation et faisant appel à un mode de traitement original des signaux échographiques de réception, en vue de l'obtention d'images plus facilement exploitables des milieux explorés.

A cet effet, l'invention concerne un procédé remarquable en ce que ledit traitement comprend également les étapes suivantes, réalisées successivement pour chaque ligne échographique à traiter :

(a) une conversion analogique-numérique des signaux échographiques corrigés, avec stockage des signaux ainsi numérisés dans une première mémoire-tampon ;

(b) une transformation de signaux échographiques comprenant successivement pour chaque ligne échographique le découpage de celle-ci en n éléments de p points, avec réarrangement desdits n x p points en une matrice X de n lignes et p colonnes et mémorisation de cette matrice, le calcul et la mémorisation du produit matriciel de X par sa matrice transposée X', après détermination de la moyenne de chaque colonne de X et soustraction de chacun des termes de la matrice de la moyenne correspondant à sa colonne, le calcul et la mémorisation des valeurs et vecteurs propres dudit produit matriciel, avec classement des valeurs propres selon un ordre croissant ou décroissant, et, avant envoi vers une deuxième mémoire-tampon, la reconstitution des éléments de ligne échographique par sélection de quelques facteurs principaux impliquant une reconstitution de la matrice somme des séries de produits matriciels unitaires relatifs auxdits facteurs principaux sélectionnés ;

(c) après mémorisation des signaux ainsi reconstitués, une conversion numérique-analogique ;

(d) une visualisation des signaux convertis, de façon similaire à celle de l'image de référence.

Le procédé ainsi proposé conformément à l'invention permet en effet d'extraire des signaux de réception complexes des informations choisies à volonté, jugées importantes par le praticien, ces informations conduisant à des images de même nature que les images classiques obtenues jusqu'à présent mais d'interprétation plus facile.

Le document "A method of non-invasive determination of an inhomogeneous layer's structure and adaptive image reconstruction", T. Sato et al, Ultrasonics Symposium Proceedings, décrit certes un procédé et un dispositif faisant appel à une manipulation matricielle des signaux échographiques reçus. Cependant les étapes du procédé sont différentes, en ce sens qu'il n'y a, dans le cas de ce document, ni réarrangement des données après le découpage de la ligne échographique à traiter, ni opérations relatives à la moyenne des colonnes de la matrice de ces données échographiques. Par ailleurs, l'objectif de ce procédé est de s'affranchir des inhomogénéités spatiales du milieu examiné, alors que, dans le cas de la présente invention, il est bien précisé qu'il s'agit de tirer un meilleur profit de la surabondance des paramètres entrant en jeu lors de l'examen échographique, à l'aide d'un mode de réception et de traitement original permettant une sélection d'informations considérées comme essentielles.

Les particularités et avantages de l'invention apparaîtront maintenant de façon plus précise dans la description qui suit et dans les dessins annexés, donnés à titre d'exemple non limitatif et dans lesquels :

- la figure 1 montre le découpage d'une ligne échographique et son réarrangement en une matrice de n x p points ;

- la figure 2 montre un exemple de réalisation d'un appareil selon l'invention.

L'analyse factorielle constitue une méthode de statistique descriptive multidimensionnelle qui utilise des calculs d'ajustement faisant appel à l'algèbre linéaire. Une telle méthode permet de fournir des représentations synthétiques d'ensembles de valeurs numériques, les objets à décrire devenant en effet des points dans un espace à plusieurs dimensions. Le principe essentiel de l'analyse factorielle est la recherche de la reconstitution d'un ensemble de n x p valeurs $x_{ij}$ à partir d'un plus petit nombre de ces valeurs.

Subsidiairement, une telle méthode d'analyse permet non pas la reconstitution du tableau complet des n x p valeurs, mais la détermination de q x (n + p) d'entre elles, avec bien entendu la relation q x (n + p) < n x p. Elle constitue donc, en fait, une technique de compression de données, si q est suffisamment petit.

Le principe général est le suivant. Etant donné une matrice X à n lignes et p colonnes que l'on veut reconstituer à partir d'un nombre de valeurs numériques plus petit que n x p, ladite reconstitution de X avec q x (n + p) valeurs est possible si l'on peut trouver q vecteurs-colonnes à n composantes et q vecteurs-colonnes à p composantes, notés respectivement u et v, tels que X = uv. On a dans ce cas reconstitué les np valeurs de X avec seulement n + p valeurs numériques, ce qui est la décomposition la plus simple possible.

Le problème ainsi résolu peut recevoir une interprétation géométrique dans un espace à p dimensions $R^p$. Les n lignes de X peuvent être considérées comme les coordonnées d'un ensemble de n points de cet espace, qu'on appellera nuage. Si ce nuage de points est en fait entièrement contenu dans un sous-espace vectoriel $R^q$ de $R^p$, il est possible de retrouver les positions des n points à partir de leurs coordonnées sur les q nouveaux axes de ce sous-espace et, bien entendu, à partir des composantes de ces nouveaux axes.

Le processus d'ajustement par un sous-espace vectoriel dans $R^p$ est réalisable de la manière suivante. On recherche d'abord la droite $F_1$ passant par l'origine des p axes qui définissent $R^p$ et qui, simultanément, ajuste au mieux le nuage des n points représentant dans $R^p$ les lignes de X. Si $M_1$ est le point de $R^p$ qui représente la première ligne de X, et si u est le vecteur unitaire porté par la droite $F_1$ et tel que u'u = 1 ou encore

$$\sum_{i=1}^{i=p} u_i^2 = 1,$$

alors les n lignes du vecteur-colonne Xu sont les n produits scalaires de ces points avec u, et représentent par conséquent les longueurs des segments déterminés par projection de ces n points sur la droite $F_1$.

Pour que la droite ajuste au mieux le nuage des n points, il faut donc minimiser la somme de ces segments

$$\sum_j M_j H_j^2$$

(j variant de 1 à n), expression dans laquelle $M_1$, $M_2$, ..., $M_n$ sont les n points de $R^p$ représentant les lignes de X, et $H_1$, $H_2$,..., $H_n$ leur projection sur la droite $F_1$. Puisque l'expression

$$\sum_j OM_j^2$$

est fixée (O étant l'origine des p axes dans $R^p$), rendre l'expression

$$\sum_j M_j H_j^2$$

minimale revient à rendre l'expression

$$\sum_j OH_j^2$$

maximale, c'est-à-dire à rechercher le vecteur unitaire u qui rend maximale la quantité (Xu)'Xu = u'X'Xu (X' = transposée de X).

On pourrait montrer de façon détaillée -mais on l'admettra- que ce sous-espace vectoriel optimal à une dimension, appelé alors $u_1$, qui ajuste au mieux au sens des moindres carrés le nuage des n points, existe.

On montrerait de même que le meilleur sous-espace vectoriel à deux dimensions réalisant cet ajustement existe également et qu'il contient $u_1$. On trouve ce sous-espace en cherchant le vecteur unitaire $u_2$ orthogonal à $u_1$ (c'est-à-dire tel que $u'_2 u_1 = 0$ et $u'_2 u_2 = 1$) qui rend maximale la forme quadratique $u'_2 X'X u_2$. De façon analogue, en raisonnant par récurrence, on voit que le sous-espace vectoriel optimal à q dimensions (avec q inférieur ou égal à p) est engendré par des vecteurs $u_1$, $u_2$, $u_3$,..., $u_{q-1}$, $u_q$ où $u_q$ est orthogonal à $u_1$, $u_2$, $u_3$,..., $u_{q-1}$ et rend maximale la forme quadratique $u'_q X'X u_q$, avec $u'_q u_q = 1$.

On démontre également que $u_1$ est le vecteur propre de la matrice $X'X$ qui a la plus grande valeur propre $\lambda_1$, et de même pour $u_2$, $u_3$, etc... avec des valeurs propres $\lambda_2$, $\lambda_3$,...$\lambda_q$,en considérant que $\lambda_2$ est la valeur propre immédiatement inférieure ou égale à $\lambda_1$, que $\lambda_3$ est la valeur propre immédiatement inférieure ou égale à $\lambda_2$, et ainsi de suite. Finalement, les q vecteurs propres normés correspondant aux q plus grandes valeurs propres de la matrice symétrique $X'X$ constituent une base orthonormée du sous-espace vectoriel $R^q$ de $R^p$ qui s'ajuste au mieux au nuage des n points.

La démonstration précédente peut être reprise de façon similaire dans un espace à n dimensions $R^n$, les p colonnes de X pouvant cette fois être considérées comme les coordonnées d'un ensemble, ou nuage, de p points de cet espace. On constate de même qu'une base orthonormée du sous-espace vectoriel à q dimensions s'ajustant au mieux, au sens des moindres carrés, au nuage des p points est constituée par q vecteurs propres $v_1$, $v_2$, $v_3$,..., $v_{q-1}$, $v_q$ correspondant aux q plus grandes valeurs propres $\mu_1$, $\mu_2$, $\mu_3$,..., $\mu_{q-1}$, $\mu_q$ de la matrice symétrique $XX'$, le vecteur cherché devant rendre maximale la forme quadratique $v'XX'\,v$ avec $v'v = 1$.

On démontre enfin que, quel que soit $\alpha$ inférieur ou égal au rang r de X et donc de $XX'$, on a les relations suivantes :

$$u_\alpha = \frac{1}{\sqrt{\lambda_\alpha}}\ X'v_\alpha$$

$$v_\alpha = \frac{1}{\sqrt{\lambda_\alpha}}\ X\,u_\alpha$$

$$\lambda_\alpha = \mu_\alpha$$

Une reconstitution approchée $X^*$ du tableau des données numériques X est alors donnée par l'expression :

$$X^* = \sum_{\alpha = 1}^{\alpha = q} \sqrt{\lambda_\alpha}\ v_\alpha u'_\alpha = \sum_{\alpha = 1}^{\alpha = q} (X u_\alpha)\ u'_\alpha$$

Cette expression montre qu'en fait le terme $X u_\alpha$ représente le poids du vecteur $u_\alpha$ dans la reconstitution approchée de X. Le calcul des différents termes $X u_\alpha$ permet donc de connaître l'importance relative de tel ou tel facteur dans ladite reconstitution.

L'analyse factorielle ainsi décrite va être maintenant appliquée à l'échographie ultrasonore. En effet, les diverses lois de la physique qui sont impliquées dans un processus échographique conduisent malheureusement à des équations très difficilement exploitables du fait de l'extrême imbrication des différents paramètres concernés. L'exploitation des images échographiques repose alors essentiellement sur la grande expérience des observateurs, médecins, etc... L'application de l'analyse factorielle à l'échographie permet de proposer un processus plus objectif de traitement des données échographiques.

On sait en effet que l'interaction d'ondes ultrasonores longitudinales émises par un transducteur (ou une structure transductrice) ultrasonore avec des tissus biologiques rend possible la formation d'images de ces tissus et surtout des interfaces entre zones relativement homogènes de ces tissus. Les échos renvoyés par ces interfaces qui marquent des ruptures d'impédance acoustique peuvent en effet être détectés, puis traités de façon à localiser les zones échogènes, le traitement tenant compte notamment de la direction des ondes et du temps d'arrivée des fronts d'ondes. Il suffit alors d'explorer séquentiellement un plan de coupe des tissus pour obtenir la formation d'une image échographique à partir de lignes échographiques successives enregistrées en déplaçant progressivement le transducteur ultrasonore sur le patient.

Plus précisément, une image ultrasonore est traditionnellement reconstituée, pour chacune des lignes qui la composent, à partir de l'enveloppe des données correspondant à chacune desdites lignes échographiques. Pour éviter la perte d'informations d'amplitude et de phase résultant de la détermination des enveloppes, on va ici appliquer l'analyse factorielle non pas à l'image globale, mais à chacune des lignes échographiques avant la prise d'enveloppe, ladite image globale étant reconstituée ultérieurement à partir des lignes traitées par analyse factorielle pour en extraire les informations essentielles.

La méthode de traitement selon l'invention est la suivante. Chacune des lignes échographiques, qui représente l'amplitude des échos reçus en fonction du temps écoulé ou de la distance ou profondeur des tissus (mode de représentation dit mode A), est découpée en éléments de même longueur, qui peuvent soit être juxtaposés, soit se chevaucher. Par exemple, une ligne est échantillonnée sur 2048 points, correspondant à une profondeur d'exploration de 6,4 centimètres, et découpée en 32 éléments juxtaposés de 64 points. Le principe de l'analyse factorielle appliqué dans ce cas consiste à construire, à partir d'un tel découpage, le tableau de données sur lequel portera l'analyse, et à effectuer cette analyse.

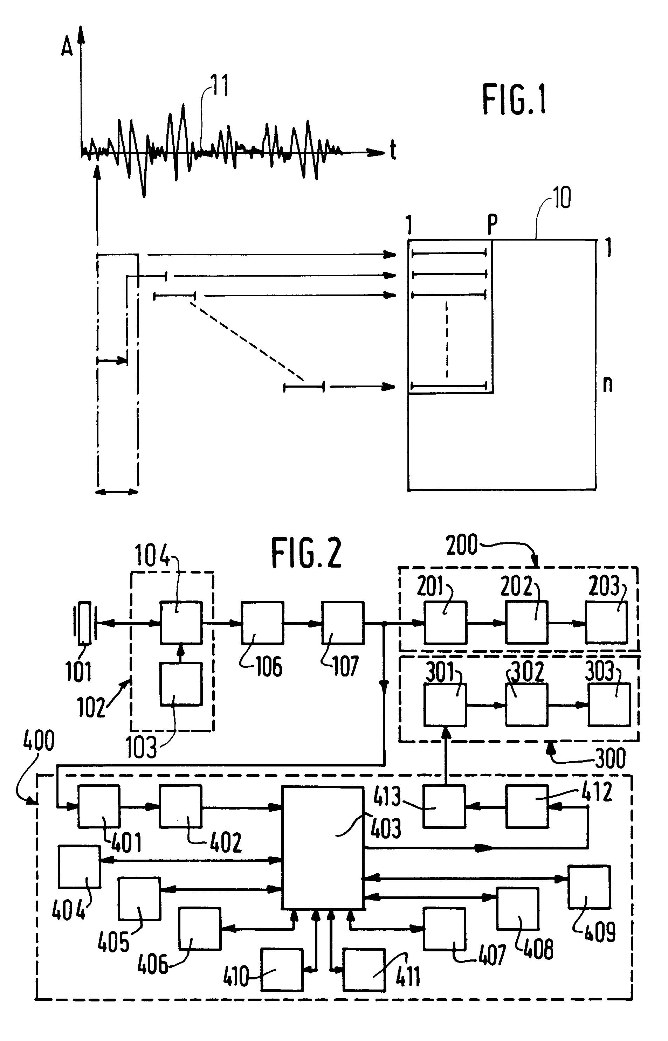

La figure 1 illustre ce découpage des lignes échographiques et la constitution du tableau des données. Le découpage d'une ligne échographique 11 en n = 32 éléments de p = 64 points chacun donne lieu à la constitution d'un tableau 10 de n lignes de p points chacune. On prend comme point de départ du tableau 10 le premier point de la ligne échographique 11. La longueur de 64 points par ligne matricielle du tableau de données a été ici retenue comme étant de l'ordre de la longueur de l'impulsion ultrasonore incidente, mais une longueur inférieure, ou de préférence supérieure, peut bien entendu être choisie. On adopte par ailleurs, dans le cas présent, un pas de ligne égal au nombre de points par élément, ici 64. Il suffira alors de juxtaposer les lignes de la matrice traitée par analyse factorielle pour reconstituer une image correspondant à la totalité des n × p points de la ligne échographique d'origine.

On a vu plus haut que la reconstitution du tableau de données initial est donnée par une expression comprenant des produits du type Xuu′. La reconstitution d'un des n éléments à partir de la nouvelle base à q dimensions est en effet réalisée par formation de la somme des produits Xuu′ relatifs aux valeurs propres retenues. La suppression, au cours de ladite reconstitution, de l'un ou de plusieurs de ces produits revient alors à sélectionner de façon corrélative l'information que l'on désire plus spécialement conserver. En traitant ensuite les lignes ainsi reconstituées comme des lignes échographiques normales, on aboutit à la formation d'une image de même nature qu'une image classique, mais dont certaines composantes ont été volontairement éliminées. L'application d'une telle méthode permet par exemple d'éliminer des signaux échographiques d'origine tout ce qui correspond à du bruit, ce qui permet d'obtenir des images plus facilement interprétables et s'avère particulièrement utile dans le cadre d'applications médicales.

La méthode de traitement de signaux échographiques peut alors, de façon avantageuse, être mise en oeuvre selon les étapes suivantes :

(1) réception et échantillonnage d'une ligne échographique avec repérage de sa position, et mise en mémoire des signaux résultant de l'échantillonnage et des paramètres de position ;

(2) réarrangement des données selon le découpage choisi, de façon à constituer la matrice X, et mise en mémoire de cette matrice ;

(3) calcul de la moyenne de chaque colonne de la matrice X et soustraction, de chacun des termes de la matrice, de la moyenne correspondant à sa colonne ;

(4) calcul et mise en mémoire du produit matriciel X'X ;

(5) calcul et mise en mémoire des valeurs propres et des vecteurs propres associés, dans le cas présent à l'aide d'un algorithme itératif utilisant la méthode dite de Jacobi, la mise en mémoire n'étant effectuée qu'après classement, par ordre de valeurs propres décroissantes par exemple ;

(6) reconstitution des éléments de lignes échographiques à partir de quelques facteurs principaux choisis, par reconstitution de la matrice somme des produits Xuu' relatifs aux facteurs choisis, addition à chaque élément de la matrice ainsi obtenue de la moyenne calculée précédemment pour chaque colonne, et réarrangement des lignes de la matrice de manière à reconstituer la ligne échographique ;

(7) prise d'enveloppe de la ligne échographique et mise en mémoire ;

(8) visualisation à partir desdites enveloppes, avec notamment interpolation entre lesdites enveloppes.

Pour la mise en oeuvre de cette méthode, un mode de réalisation préférentiel d'échographe ultrasonore va être maintenant décrit. L'appareil d'examen de milieux selon l'invention comprend, dans l'exemple représenté sur la figure 2, d'une part des éléments de type classique, tels que la structure transductrice, l'étage d'émission et, dans l'étage de réception et de traitement, le dispositif de visualisation, et d'autre part les éléments originaux, à savoir un dispositif de traitement des signaux échographiques qui est prévu dans ledit étage de réception, en parallèle sur le dispositif de visualisation.

Plus précisément, l'appareil selon l'invention comprend ici un transducteur ultrasonore 101 dont l'excitation est commandée par un étage d'émission 102 composé essentiellement d'un circuit d'excitation de transducteur 103 et d'un circuit d'aiguillage 104. Une horloge interne à l'étage d'émission définit les rythme et fréquence d'émission des ondes ultrasonores par le transducteur, et définit les durées des périodes d'émission et de réception. A l'émission, le circuit d'excitation 103 et le transducteur 101 sont reliés par l'intermédiaire du circuit d'aiguillage 104 qui occupe sa position émission. A la réception, les signaux échographiques fournis par le transducteur en réponse aux échos qu'il reçoit sont envoyés, par l'intermédiaire du circuit d'aiguillage 104 venu en position réception, vers l'étage de réception comprenant successivement un amplificateur 106, un circuit 107 de correction de l'atténuation des ondes ultrasonores dans les milieux traversés (en fait, un amplificateur à gain croissant en fonction du temps), et, dans deux voies en parallèle, le dispositif de visualisation de type connu et le dispositif de traitement selon l'invention.

Le dispositif de visualisation, référencé 200, comprend ici un redresseur 201, un filtre passe-bas 202, et un étage 203 incluant tous les circuits nécessaires à la constitution d'une image à partir des données fournies pour chacune des lignes échographiques concernant le plan de coupe balayé. Un dispositif de visualisation de ce type est classique dans un échographe, et lesdits circuits ne seront donc pas décrits plus en détail.

Le dispositif de traitement selon l'invention comprend un dispositif de calcul 400, suivi d'un dispositif de visualisation 300 semblable au dispositif 200 et composé donc de circuits 301, 302, 303 identiques aux circuits 201, 202, 203. Ce dispositif de calcul 400 comprend d'abord un convertisseur analogique-numérique rapide 401, par exemple un convertisseur 8 bits/20 mégahertz tel le convertisseur 1048 de la société TRW, La Jolla, CA 92038, USA. Ce convertisseur 401 est suivi d'une première mémoire-tampon 402 qui permet de stocker avant leur traitement l'ensemble des signaux concernant les lignes échographiques du plan de coupe balayé.

Une unité de calcul programmable 403 reçoit alors la sortie de la mémoire-tampon 402. Autour de cette unité de calcul, qui est par exemple un microprocesseur 68020 de la Société Motorola, 1303 East Algonquin Road, Schaumburg, Illinois 60196, USA, sont prévues une mémoire de travail 404, une mémoire 405 de stockage des programmes de traitement, une interface 406 praticien/unité de calcul qui constitue un organe d'entrée-sortie pour le choix des paramètres intervenant dans le traitement, une mémoire 410 de stockage de ces paramètres, une première mémoire 407 à adressage matriciel pour le stockage sous forme matricielle de chaque ligne échographique en cours de traitement, une mémoire 411 de stockage des valeurs moyennes de chaque colonne de la matrice stockée dans la mémoire 407, une mémoire intermédiaire 408 de stockage des valeurs propres et des vecteurs propres relatifs au traitement d'une ligne échographique, une deuxième mémoire 409 à adressage matriciel pour le stockage des signaux résultant des recombinaisons partielles de lignes échographiques effectuées pour reconstituer celles-ci à partir de quelques facteurs principaux choisis par le praticien selon son expérience de l'interprétation des images et selon celles des informations qu'il veut mettre en évidence au vu de l'image de référence, et une deuxième mémoire-tampon 412 qui permet de stocker les lignes échographiques reconstituées, après leur traitement. En sortie de cette mémoire-tampon 412 est enfin prévu un convertisseur numérique-analogique 413, en sortie duquel les signaux sont envoyés vers le dispositif de visualisation 300.

Le fonctionnement de l'appareil ainsi décrit est essentiellement le suivant. Après un balayage mécanique ou électronique correspondant à un plan de coupe déterminé dans le milieu à explorer, les signaux échographiques disponibles en sortie du circuit 107 de correction des effets de l'atténuation suivent deux chemins parallèles. D'une part ces signaux sont envoyés vers le dispositif de visualisation 200, de type classique comme on l'a vu, en vue de la formation d'une image traditionnelle de référence. D'autre part ces mêmes signaux sont reçus par le dispositif de calcul 400 qui assure d'abord la numérisation des lignes échographiques, dans le convertisseur 401, puis leur stockage, dans la première mémoire-tampon 402. Après ce traitement préliminaire, les lignes échographiques sont traitées l'une après l'autre.

Grâce au logiciel de traitement stocké dans la mémoire 405 de stockage des programmes de traitement, chaque ligne échographique est d'abord découpée, puis replacée sous forme matricielle X dans la première mémoire 407 à adressage matriciel. Ce logiciel stocké dans la mémoire 405 réalise, comme fonctions essentielles, la soustraction de chaque élément de X de la moyenne correspondant à la colonne de X où se trouve cet élément (cette moyenne est stockée dans la mémoire 411), le produit matriciel XX′, le calcul des valeurs et vecteurs propres de la matrice ainsi obtenue, le classement de ces valeurs propres (par ordre de valeurs propres décroissantes par exemple), et le stockage de ces valeurs et vecteurs propres. En fonction des numéros des facteurs principaux choisis a priori par le praticien (et stockés dans la mémoire 410 de stockage de paramètres), le logiciel exécute alors également les produits Xuu′ correspondants, puis l'addition de ces produits et leur commande de stockage dans la deuxième mémoire 409 à adressage matriciel.

A chaque élément de la nouvelle matrice ainsi constituée est alors rajoutée la moyenne stockée en mémoire 411 et correspondant à sa colonne. Enfin chaque ligne échographique est reconstituée par une opération de réalignement inverse de celles du découpage initial et de la mise sous forme matricielle, puis mémorisée dans la deuxième mémoire-tampon 412 avant d'être envoyée par l'intermédiaire du convertisseur numérique-analogique 413 vers le dispositif de visualisation 300.

Bien entendu, la présente invention n'est pas limitée à l'exemple de réalisation décrit, à partir duquel des variantes peuvent être proposées sans pour cela sortir du cadre de l'invention tel que défini par les revendications. En effet, l'appareil décrit ici, et qui fonctionne avec l'assistance d'un microcalculateur pour l'exécution de certaines fonctions, ne constitue pas la seule réalisation envisageable. On peut évidemment utiliser, en lieu et place de ce logiciel, les circuits numériques qui réalisent chacune de ses étapes, mais une telle utilisation est au prix d'une complexité accrue. Par ailleurs, les premier et deuxième dispositifs de visualisation de l'étage de réception et de traitement peuvent être regroupés dans un même ensemble ou étage de visualisation. Enfin, on remarquera bien que l'invention a été décrite dans le cas du traitement d'une ligne échographique, découpée ensuite en segments, mais que lesdits segments peuvent également ne pas provenir de la même ligne échographique, et être par exemple des segments spatialement voisins d'un ensemble de lignes échographiques successives.

**Revendications**

1. Procédé d'examen de milieux par échographie ultrasonore, conprenant d'une part l'émission d'ondes ultrasonores vers le milieu à explorer à l'aide d'une structure transductrice excitée à cet effet avec des fréquence, durée et rythme d'émission déterminés, et d'autre part la réception et le traitement des signaux échographiques correspondant aux échos renvoyés vers ladite structure transductrice par les obstacles rencontrés dans le milieu exploré, ledit traitement des signaux échographiques associés à chaque ligne échographique du plan de coupe dans le milieu exploré comprenant une amplification desdits signaux, leur correction des effets de l'atténuation en fonction du temps ou de la profondeur d'exploration, et leur visualisation pour constituer une image de référence, caractérisé en ce que ledit traitement comprend également les étapes suivantes, réalisées successivement pour chaque ligne échographique à traiter :

    (a) une conversion analogique-numérique des signaux échographiques corrigés, avec stockage des signaux ainsi numérisés dans une première mémoire-tampon ;
    (b) une transformation de signaux échographiques comprenant successivement pour chaque ligne échographique le découpage de celle-ci en n éléments de p points, avec réarrangement desdits nxp points en une matrice X de n lignes et p colonnes et mémorisation de cette matrice, le calcul et la mémorisation du produit matriciel de X par sa matrice transposée X', après détermination de la moyenne de chaque colonne de X et soustraction de chacun des termes de la matrice de la moyenne correspondant à sa colonne, le calcul et la mémorisation des valeurs et vecteurs propres dudit produit matriciel, avec classement des valeurs propres selon un ordre croissant ou décroissant, et, avant envoi vers une deuxième mémoire-tampon, la reconstitution des éléments de ligne échographique par sélection de quelques facteurs principaux impliquant une reconstitution de la matrice somme des séries de produits matriciels unitaires relatifs auxdits facteurs principaux sélectionnés ;
    (c) après stockage, dans ladite deuxième mémoire-tampon, des signaux ainsi reconstitués, une conversion numérique-analogique ;
    (d) une visualisation des signaux convertis, de façon similaire à celle de l'image de référence.

2. Appareil d'examen de milieux par échographie ultrasonore pour la mise en oeuvre du procédé selon la revendication 1, comprenant une structure transductrice associée à un étage d'émission pour l'envoi d'ondes ultrasonores vers le milieu à explorer et à un étage de réception et de traitement des échos renvoyés vers ladite structure transductrice par les obstacles rencontrés par les ondes ultrasonores dans le milieu exploré, ledit étage de réception et de traitement recevant les signaux échographiques associés à chaque ligne échographique du plan de coupe dans le milieu exploré et comprenant au moins un amplificateur, un circuit de correction des effets de l'atténuation des ondes ultrasonores dans le milieu exploré, et un premier dispositif de visualisation recevant les signaux corrigés présents en sortie dudit circuit, caractérisé en ce que ledit étage de réception comprend également en parallèle sur le premier dispositif de visualisation un dispositif de calcul suivi d'un deuxième dispositif de visualisation, ledit dispositif de calcul comprenant lui-même un convertisseur analogique-numérique, une première mémoire-tampon de stockage desdits signaux échographiques corrigés, des moyens de transformation ligne échographique par ligne échographique de ces signaux échographiques corrigés, une deuxième mémoire-tampon de stockage des signaux échographiques transformés, un convertisseur numérique-analogique, et un deuxième dispositif de visualisation, lesdits moyens de transformation de signaux échographiques étant conçus pour réaliser, successivement pour chaque ligne

8

**EP 0 288 115 B1**

échographique ou pour une ligne constituée de segments spatialement voisins d'un ensemble de lignes échographiques juxtaposées le découpage de celle-ci en n éléments de p points, avec réarrangement desdits n × p points en une matrice X de n lignes et p colonnes et mémorisation de cette matrice, le calcul et la mémorisation du produit matriciel de X par sa matrice transposée X', après détermination de la moyenne de chaque colonne de X et soustraction, de chacun des termes de la matrice, de la moyenne correspondant à sa colonne, le calcul et la mémorisation des valeurs et vecteurs propres dudit produit matriciel, avec classement des valeurs propres selon un ordre croissant ou décroissant, et, avant envoi vers la deuxième mémoire-tampon,la reconstitution des éléments de lignes échographiques par sélection de quelques facteurs principaux impliquant une reconstitution de la matrice somme des séries de produits matriciels unitaires relatifs auxdits facteurs principaux sélectionnés.

3. Appareil selon la revendication 2, caractérisé en ce que les premier et deuxième dispositifs de visualisation sont inclus dans un même étage de visualisation.

## Claims

1. A method for the examination of media by ultrasonic echography, including on the one hand the transmission of ultrasonic waves to the medium to be scanned by means of a transducer array which is for this purpose excited with a given transmission frequency, duration and rhythm, and on the other hand the reception and processing of the echographic signals which correspond to the echoes returned to said transducer array by the obstacles encountered in the medium scanned, which processing of the echographic signals associated with each echographic line of the cross-section in the medium scanned includes amplification of said signals, their correction for attenuation effects as a function of time or scanning depth, and their display in order to form a reference image, characterized in that said processing also includes the following steps which are successively performed for each echographic line to be processed:
   (a) analog/digital conversion of the corrected echographic signals, the signals thus digitized being stored in a first buffer memory;
   (b) transformation of echographic signals, which operation successively includes for each echographic line its sub-division into n elements of p points, said n x p points being rearranged in a matrix X comprising n rows and p columns and the storage of this matrix, the calculation and the storage of the matrix product of X and its transposed matrix X', after determination of the mean value of each column of X and subtraction of each term of the matrix from the mean value corresponding to its column, the calculation and storage of the eigenvalues and eigenvectors of said matrix product, including the arrangement of the eigenvalues in an ascending or descending order and, before their supply to a second buffer memory, the reconstruction of the elements of the echographic line by selection of some principal factors, implying a reconstruction of the sum matrix of the series of unity matrix products relating to said selected principal factors;
   (c) digital/analog conversion after storage of the signals thus reconstructed;
   (d) display of the converted signals in a way similar to that of the reference image.

2. An apparatus for the examination of media by ultrasonic echography for performing the method claimed in Claim 1, comprising a transducer array which is connected to a transmitter stage for the transmission of ultrasonic waves to the medium to be scanned and to a receiver and processing stage for the echoes returned to said transducer array by the obstacles encountered by the ultrasonic waves in the medium scanned, which receiver and processing stage receives the echographic signals associated with each echographic line of the cross-section in the medium scanned and comprises at least an amplifier, a circuit for correcting attenuation effects of the ultrasonic waves in the medium scanned, and a first display device which receives the corrected signals present on the output of said circuit, characterized in that said receiver stage also comprises, connected parallel to the first display device, an arithmetic device which is followed by a second display device, which arithmetic device itself comprises an A/D converter, a first buffer memory for storing said corrected echographic signals, means for transforming, one echographic line after the other, these corrected echographic signals, a second buffer memory for storing the transformed echographic signals, a D/A converter, and a second display device, said transformation means for the echographic signals being conceived to execute successively, for each echographic line or for a line formed by spatially neighbouring segments of a set of juxtaposed echographic lines, the sub-division thereof into n elements of p points, with rearrangement of said n x p points in a matrix X consisting of n rows and p columns, and the storage of said

9

EP 0 288 115 B1

matrix, the calculation and storage of the matrix product of X and its transposed matrix X', after determination of the mean value of each column of X and subtraction of each term of the matrix from the mean value corresponding to its column, the calculation and storage of the eigenvalues and eigenvectors of said matrix product, with arrangement of the eigenvalues according to an ascending or descending order and, before their supply to the second buffer memory, the reconstruction of the elements of the echographic lines by selection of some principal factors, implying a reconstruction of the sum matrix of the series of unity matrix products relative to said selected principal factors.

3.  An apparatus as claimed in Claim 2, characterized in that the first and the second display device are included in the same display stage.

**Patentansprüche**

1.  Verfahren zur Untersuchung von Medien mittels Ultraschall-Echographie, einerseits durch die Lieferung von Ultraschallwellen nach dem zu untersuchenden Medium mit Hilfe einer Wandlerstruktur die dazu mit bestimmter Sendefrequenz, Sendedauer und bestimmtem Emissionstakt angeregt wird, und anderrerseits durch den Empfang und die Bearbeitung der echographischen Signale entsprechend den durch die im untersuchten Medium begegneten Gegenständen nach der Wandlerstruktur zurückgesandten Echos, wobei die Bearbeitung der echographischen Signale, die jeder echographischen Linie auf der Schnittebene im untersuchten Medium zugeordnet ist, eine Verstärkung dieser Signale, ihre Korrektur der Abschwächungseffekte abhängig von der Zeit oder von der Untersuchungstiefe, und ihre Visualisierung zum Aufbauen eines Bezugsbildes umfaßt, dadurch gekennzeichnet, daß die Bearbeitung ebenfalls folgende Schritte umfaßt, die aufeinanderfolgend für jede zu bearbeitende echographische Linie verwirklicht werden:

    (a) eine Analog/Digitalumwandlung der korrigierten echographischen Signale mit Speicherung der auf diese Weise digitalisierten Signale in einem ersten Pufferspeicher,
    (b) eine Transformation echographischer Signale, die für jede echographische Linie das Zerschneiden dieser Linie in n Elemente von p Punkten umfaßt, mit Neuordnung der n x p Punkte in einer Matrix X von n Zeilen und p Spalten und Speicherung dieser Matrix, die Berechnung und Speicherung des Matrixprodukts von X mit ihrer transponierten Matrix X' nach der Bestimmung des Mittelwerts jeder Spalte von X und Subtraktion jedes der Terme der Matrix von dem ihrer Spalte entsprechenden Mittelwert, die Berechnung und Speicherung der Eigenwerte und Eigenvektoren des Matrixprodukts, unter Klassifizierung der Eigenwerte entsprechend einer größer oder kleiner werdenden Ordnung, und vor der Übersendung nach einem zweiten Pufferspeicher die Rekonstruktion der echographischen Linienelemente durch die Wahl einiger Hauptfaktoren, die eine Rekonstruktion der Matrixsumme der Reihen einheitlicher Matrixprodukte in bezug auf die gewählten Hauptfaktoren impliziert;
    (c) eine Digital/Analogumwandlung nach der Speicherung der auf diese Weise rekonstruierten Signale im zweiten Pufferspeicher;
    (d) eine Visualisierung der umgewandelten Signale auf die gleiche Weise wie die des Bezugsbildes.

2.  Gerät zur Untersuchung von Medien durch Ultraschall-Echographie zur Durchführung des Verfahrens nach Anspruch 1, mit einer Wandlerstruktur, die einer Sendestufe zum Übersenden von Ultraschallwellen nach dem zu untersuchenden Medium und einer Empfangs- und Bearbeitungsstufe der von der Wandlerstruktur zurückgesandten Echos an den von den Ultraschallwellen begegneten Gegenständen im untersuchten Medium zugeordnet ist, wobei die Empfangs- und Bearbeitungsstufe die echographischen Signale empfängt, die jeder echographischen Linie in der Schnittebene im untersuchten Medium zugeordnet ist und wenigstens einen Verstärker, eine Korrekturschaltung für die Schwächungseffekte der Ultraschallwellen im untersuchten Medium enthält, und eine erste Visualisierungseinrichtung die korrigierten Signale am Ausgang dieser Schaltung empfängt, dadurch gekennzeichnet, daß die Empfangsstufe ebenfalls in Parallelschaltung mit der ersten Visualisierungseinrichtung eine Berechnungseinrichtung enthält, der eine zweite Visualisierungseinrichtung nachgeschaltet ist, wobei die Berechnungseinrichtung selbst einen Analog/Digitalwandler, einen ersten Pufferspeicher zum Speichern der korrigierten echographischen Signale, Mittel zum Transformieren der echographischen Linie nach der echographischen Linie der korrigierten echographischen Signale, einen zweiten Pufferspeicher zum Speichern der transformierten echographischen Signale, einen Digital/Analogwandler und eine zweite Visualisierungseinrichtung enthält, die Transformationsmittel für die echographischen Signale zum aufeinanderfolgenden Verwirklichen der Zerschneidung dieser Linie in n Elemente von p Punkten für

10

jede echographische Linie oder für eine Linie vorgesehen sind, die aus räumlich benachbarten Segmente einer Gruppe echographischer nebeneinander liegender Linien besteht, diese n x p Punkte in eine X-Matrix von n Zeilen und p Spalten neugeordnet werden und diese Matrix gespeichert wird, das Matrixprodukt von X mit ihrer transponierten Matrix X' berechnet und gespeichert wird nach der Bestimmung des Mittelwerts jeder Spalte von X und Subtraktion jedes der Matrixterme von dem ihrer Spalte entsprechenden Mittelwert, die Eigenwerte und Eigenvektoren des Matrixprodukts berechnet und gespeichert und die Eigenwerte gemäß einer sich zunehmenden oder abnehmenden Ordnung klassifiziert werden und vor der Übersendung nach dem zweiten Pufferspeicher die Elemente echographischer Linien durch die Wahl einiger Hauptfaktoren rekonstruiert werden, die ein Rekonstruktion der Matrixsumme der Reihen einheitlicher Matrixprodukte bezüglich der gewählten Hauptfaktoren implizieren.

3. Gerät nach Anspruch 2, dadurch gekennzeichnet, daß die erste und die zweite Visualisierungseinrichtung in eine selbe Visualisierungsstufe aufgenommen sind.

FIG.1

FIG.2